# EUROPEAN PATENT APPLICATION

(11) **EP 4 636 916 A1**
(43) Date of publication of application: **22.10.2025**
(21) Application number: 24170444.4
(22) Date of filing: 16.04.2024
(51) Int. Cl.: H01M 50/178, H01M 50/553, H01M 50/211

(54) **A METHOD FOR ASSEMBLING A BATTERY MODULE OR BATTERY PACK AND CORRESPONDING BATTERY MODULE**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

A method of assembling a battery module or battery pack comprising a plurality of battery cells and a housing for holding the plurality of battery cells, the method comprising providing a battery cell comprising an electrode assembly, a case accommodating the electrode assembly, and a conductive lead connected to the electrode assembly and extending outside of the case, bending the conductive lead in accordance with a predetermined cell position of the battery cell in the housing, such that a distal portion of the conductive lead extends from a bent portion of the conductive lead at an angle with respect to a proximal portion of the conductive lead towards a lead terminal of the housing for the predetermined cell position, the proximal portion being in physical contact with the electrode assembly, and inserting the battery cell into the housing at the predetermined cell position.

## Description

### FIELD OF THE INVENTION

The present invention is in the field of secondary batteries. More precisely, the present invention relates to the assembling of battery modules/packs from a plurality of battery cells.

### BACKGROUND

Secondary batteries are ubiquitous in modern consumer electronics and increasingly feature in current vehicular technology. Secondary batteries provide a means for storing energy in a stack of two active electrode materials, forming anode and cathode, separated by a separator, with an electrolyte for ion transfer between the active electrode materials. The material stack can be packaged, e.g. by rolling the material stack to obtain a cylindrical cell or by stacking the materials in a prismatic case.

A pouch-type battery is a secondary battery that is made by stacking up the main components of cathode, anode, and separator in a pouch-shaped case and injecting electrolyte into it, with current tabs protruding from the pouch for electrical connection. The pouch is generally fabricated from aluminum and polymers and can retain the active battery materials and the electrolyte in the case. Each pouch-type case can include a stack of multiple sheets of active materials and separators, which can be connected in parallel or serially to form a battery cell.

Battery packs generally incorporate many discrete cells connected in series and/or parallel to achieve the total voltage and current requirements of the pack. To assist in manufacturing and assembly, the large stack of cells is typically grouped into smaller stacks called modules. Several of these modules are placed into a single pack.

### SUMMARY OF THE INVENTION

The known methods for assembling modules/packs from a plurality of battery cells can however suffer from reduced lifetime due to mechanical strain or shorts introduced during assembly. Conductive leads protruding from the battery cell are generally pliable, and can therefore be fitted through lead holes of the module frame which need not aligned with the battery cell. However, in practice, when the electrode tabs of battery cells are connected to terminals of a battery module and/or a battery pack, the inventors observed the risk of mechanical strain introduced when assembling the module/battery pack propagating into the battery cell and laterally deflecting the electrode tab inside of the case, such as a pouch-type case, thereby increasing a risk of mechanical failure or interference of leads, and overall reducing the average lifetime of the battery module/battery pack.

In view of this state-of-the-art, the object is to provide an improved method of battery module/pack assembly and an associated battery module/pack.

According to a first aspect, a method of assembling a battery module or battery pack is provided, the battery module or battery pack comprising a plurality of battery cells and a housing for holding the plurality of battery cells. The method comprises providing a battery cell comprising an electrode assembly, a case accommodating the electrode assembly, and a conductive lead connected to the electrode assembly and extending outside of the case. The method further comprises bending the conductive lead in accordance with a predetermined cell position of the battery cell in the housing, such that a distal portion of the conductive lead extends from a bent portion of the conductive lead at an angle with respect to a proximal portion of the conductive lead towards a lead terminal of the housing for the predetermined cell position, the proximal portion being in physical contact with the electrode assembly. The method further comprises inserting the battery cell into the housing at the predetermined cell position.

The method can overcome the problems faced in the prior art, where the assembly of the battery module/pack produced lateral strain on the electrode tabs in the pouch. Rather, the conductive lead can be bent in accordance with a position of the battery cell in the housing, e.g. prior to assembly of the battery cell in the housing. In other words, the battery cell can be inserted into the housing at the predetermined cell position after bending the conductive lead. In that way, the bending angle between the proximal portion and the distal portion can correspond to an angle of the conductive lead in the inserted configuration, thereby avoiding the introduction of strain during assembly.

In many applications, the battery cells are combined to form battery modules, with multiple modules combining to form a battery pack. In these cases, the housing can be a module housing of the module holding a certain number of battery cells. However, a plurality of battery cells can also be directly combined to form a battery pack, and in such a case, the housing can also be considered a housing of the battery pack. The housing can comprise mounting elements for holding each battery cell in its predetermined position.

The electrode assembly can comprise a plurality of layers of active electrode materials and separator sheets. The active electrode materials can be stacked in alternating fashion with separator sheets arranged therebetween. Additionally or alternatively, adjacent stacks of active materials and a separator sheet can be separated by an insulating sheet. The electrode assembly can be held in the case with an electrolyte.

In some examples, the case is a pouch-type case, and the battery cell is a pouch-type battery cell.

In a pouch-type battery cell, the electrode assembly is held in the pouch-type case with the electrolyte, and the conductive lead can protrude through a seam of the pouch-type case to enable an external electrical connection to the electrode assembly. The pouch may be a laminate pouch generally comprising a barrier material, e.g. based on aluminum foil, and polymer sheets joined to the barrier material. In some examples, an aluminum laminate pouch film of the case comprises a scratch-resistant polyamide polymer film and a low-moisture permeability polyolefin polymer film affixed onto an aluminum foil, with the former on the outer cell surface and the latter on the inner cell surface. As an example, an aluminum laminate pouch may comprise a stack of an oriented nylon layer, an aluminum barrier layer, and a sealant polymer layer, such as a polypropylene layer, with adhesive layers therebetween, such as a dry laminate layer, an adhesive propylene layer, or the like. The pouch-type case may also be considered a flexible pouch and/or a foil-type pouch.

The method according to the first aspect can prevent inadvertent strain of the electrode tabs, which may propagate during the assembly in the housing through the flexible pouch-type case. However, the method of the first aspect may also be advantageously applied to other battery types, such as cylindrical battery cells, in which the electrode assembly of layered electrodes and separators is rolled to assume a cylindrical shape, or prismatic battery cells, in which the layered electrodes and separators are held together with the electrolyte in a (prismatic) rigid case.

The conductive lead may protrude from the case to provide an external electrical connection to the electrode assembly. For a pouch-type case, the conductive lead may be a flat rectangular conductor with a terminal film, e.g. a polyolefin polymer film, serving as insulation, laminated partially to both sides. The conductive lead may comprise an Al terminal and a Ni or Cu terminal for contacting the cathode(s) and anode(s) of the electrode assembly, respectively. In an assembled state, the terminal film may overlap with an opening of the laminate pouch from which the conductive lead protrudes, and may seal the inside of the laminate pouch. For example, the opening may be heat sealed by thermally bonding the laminate pouch and the terminal film.

The conductive lead can comprise a case/pouch portion, located inside of the (pouch-type) case, a sealing portion, sandwiched and sealed between opposite side of the pouch-type case, and an external portion, protruding from the pouch-type case for external electrical connection to the electrode assembly. The pouch portion may be electrically connected to electrode tab(s) of the electrode assembly.

In the method, the conductive lead is bent prior to assembly of the battery module/pack, such that the conductive lead protrudes towards an intended assembly position in the housing of the battery module/pack. The lead terminal may be a connection point for connecting the conductive lead to the housing. For example, the conductive lead may be electrically connected to an electrical conduit fixed or connected to the housing. In some examples, the lead terminal may be an aperture in the housing for guiding the conductive lead, wherein the conductive lead may extend through the aperture for electrical connection to the battery cells, such as a slit defined by structural elements in the housing. In some examples, the housing comprises a lead hole as the lead terminal, wherein the conductive lead may extend through the lead hole for electrical connection to the battery cell external to the housing.

In some examples, the angle is selected such that the conductive lead extends through a lead hole of the housing when the battery cell is in the predetermined cell position.

Preferably, the bent portion is located in the external portion of the conductive lead, such as to prevent bending of the conductive lead in the case/pouch portion or the sealing portion of the conductive lead.

In some examples, the bent portion is arranged outside the case.

The bent portion can be a non-elastic bent portion, such that the distal portion extends from the proximal portion at the angle in the absence of external forces. With the angle associated with the bent portion selected in accordance with the predetermined cell position, mechanical strain on the battery cell transferred through the sealing portion or the case/pouch portion of the conductive lead may be minimized.

In some examples, the conductive lead is bent, such that the proximal portion extends in parallel to a length direction of the electrode assembly inside of the case, when the battery cell is inserted into the housing at the predetermined cell position.

The conductive lead can be bent, such that the proximal portion extends to the bent portion in parallel to a length direction of the electrode assembly, when the battery cell is inserted into the housing at the predetermined cell position. The bent portion can be a kink-type bent, from which the conductive lead extends at a different angle.

In some examples, the conductive lead is bent, such that the proximal portion is a straight and flat plate portion.

The conductive lead may be plate shaped, with two dimensions, length and width, significantly greater than a thickness of the conductive lead, e.g. the length and width may be 4 or 8 times the thickness of the conductive lead, or more. The conductive lead may protrude from the case along the length direction of the electrode assembly and/or the battery cell. The conductive lead may be straight along the length direction up to the bent portion, and a folding line of the bent portion may extend along the width direction. From the bent portion, the conductive lead may extend straight in the distal portion.

In some examples, the conductive lead is bent, such that the distal portion is a straight and flat plate portion.

The extent of the distal portion may be (significantly) larger than the thickness of the conductive lead, e.g. 2, 4 or 8 times larger than the thickness of the conductive lead, and may extend at angle with respect to a length direction of the battery cell, along which electrodes of the battery assembly extend towards the conductive lead.

The lead terminal may generally be shifted laterally from the opening of the case through which the conductive lead protrudes, wherein the lateral shift is with respect to a longitudinal axis of the battery cell along its length direction, and the distal portion may define a path of the conductive lead towards the lead terminal of the housing. In some examples, the distal portion may be adjacent to further bent portions, e.g. to define a segmented path of the conductive lead towards the lead terminal of the housing along different angles. The further bent portions should equally be formed through bending prior to assembly, such as to prevent mechanical strain introduced during the insertion of the battery cell into the housing and/or the threading of the conductive lead through a corresponding lead hole of the housing as the lead terminal.

In some examples, the bent portion features a kink determining the angle of the distal portion with respect to the proximal portion.

The kink may be introduced during bending and may determine the angle between the distal portion with respect to the proximal portion, when the battery cell is in the predetermined cell position, e.g. between their respective extension directions perpendicular to the bending axis.

Multiple battery cells may be combined in the housing, and their respective bent portions may be configured differently in accordance with their respective different predetermined cell positions.

In some examples, the battery cell is a first battery cell, wherein the method further comprises providing a second battery cell, and bending the conductive lead of the second battery, such that a second angle between the proximal portion and the distal portion of the conductive lead of the second battery cell is different from the angle of the conductive lead of the first battery cell.

The bent portions of the first battery cell and the second battery cell may be configured in accordance with the respective different predetermined cell positions of the first battery cell and the second battery cell prior to assembly in the housing. The proximal portions of the conductive leads of the first battery cell and of the battery cell may extend along the same direction, when inserted into the housing, such as the length direction of the electrode assembly.

As a result, elastic bending strain of the conductive leads introduced during assembly, e.g. propagating through respective first and second pouch-type cases to the respective electrode assemblies can be minimized, with the conductive leads pre-bent inelastically into their respective shapes for assembly in the housing. The prior definition of the bent portion can further reduce a risk of lead interference in the housing.

Generally, the battery cell will be manufactured with the conductive lead protruding straight from the case, e.g. along the length direction of the battery cell, and may be bent prior to assembly in the housing. However, in alternative examples, the conductive lead is bent prior to sealing of the case, and the battery may be provided with the conductive lead already featuring the bent portion. As a result, the order of the steps of providing the battery cell and bending the conductive lead may be reversed in some examples.

Moreover, in some examples, the housing may be provided with a conductive lead clamping portion, which can limit a motion of the proximal portion of the conductive lead. The conductive lead may then be bent inelastically about the conductive lead clamping portion, such that the bent portion is induced in a portion distal from the conductive lead clamping portion. For example, the case/pouch portion, the sealing portion and/or a conductive lead portion outside the case may be held by the conductive lead clamping portion, such that the conductive lead can be bent inside of the housing while preventing movement of the proximal portion of the conductive lead.

As an example, the conductive lead may slot into a slot in the housing, such that the proximal portion at least partially rests in the slot, and a portion of the lead arranged distally with respect to the slot may be bent about the slot to induce the bent portion. In such examples, the conductive lead may extend straight from the electrode assembly through the slot, e.g. along a length direction of the electrode assembly, with the slot defining an extension direction of at least a portion of the conductive lead proximal to the bent portion, i.e. closer to the electrode assembly than the bent portion. The slot be configured to maintain an extension direction of a portion of the conductive lead while bending, such as by having a width which is smaller than two times the thickness of the conductive lead and a length larger than four times the width of the slot.

The skilled person will further appreciate that the slot may be exchanged for a an automated clamping element, which may hold the proximal portion of the conductive lead in place while the conductive lead is inelastically bent to induce the bent portion, while the battery cell rests inside the housing, e.g. through appropriate robotic arms for holding and/or deflecting the conductive lead. Thus, bending of the conductive lead can also be performed after inserting the battery cell into the housing.

The battery module or battery pack can be assembled in an assembly system, which can comprise a bending module for receiving the battery cell and bending the conductive lead arranged prior to an assembly module for receiving the battery cell comprising a conductive lead with the bent portion and for inserting the battery cell into the housing.

According to a second aspect, system for assembling a battery module or battery pack comprising a battery cell is provided, the system comprising a bending module configured to bend a conductive lead of the battery cell according to a predetermined cell position of the battery cell in a housing of the battery module or battery pack, such that a distal portion of the conductive lead extends from a bent portion of the conductive lead at an angle with respect to a proximal portion of the conductive lead towards a lead terminal of the housing for the predetermined cell position, the proximal portion being in physical contact with an electrode assembly of the battery cell, when the electrode assembly is enclosed in a corresponding case.

In some examples, the bending module is configured to receive a battery cell with the conductive lead protruding from the battery cell and to bend the conductive lead in an assembled state of the battery cell prior to insertion of the battery cell into the housing or while the battery cell is held in the housing. The bending of the conductive lead may be inelastic.

In some examples, the bending module is configured to receive and bend the conductive lead prior to a sealing of the battery cell, and the system further comprises a sealing module to seal the case of the battery cell after the conductive lead has been bent.

For example, an assembly of the battery cell, such as a pouch-type battery cell, may comprise receiving a case, an electrode assembly and the conductive lead already bent, and sealing the case with the bent portion of the conductive lead arranged outside of the case.

The conductive lead may comprise a terminal film for sealing a pouch-type case of the battery cell around the conductive lead, which may join with the pouch-type case during a sealing process, and the bent portion may be introduced in a position of the conductive lead, which is distal to the terminal film, such as to lie outside the pouch-type case, when the pouch-type battery cell is assembled.

The system according to the second aspect may implement the method of the first aspect and may comprise means corresponding to respective steps of the method.

According to a third aspect, a battery module or battery pack is provided comprising a housing comprising a plurality of lead terminals and a battery cell. The battery cell comprises an electrode assembly comprising sheets of electrodes and separators layered upon each other in a thickness direction, a case accommodating the electrode assembly, and a conductive lead having a proximal portion physically connected to the electrode assembly and a distal portion extending outside of the case. The conductive lead is configured to include a bent section so that the distal portion extends at an angle with respect to the proximal portion towards a lead terminal of the plurality of lead terminals, wherein the proximal portion extends through the case in a direction parallel to a length direction of the electrode assembly.

In some examples, the case is a pouch-type case, and the battery cell is a pouch-type battery cell, which is assembled in a housing of a pouch-type battery module or battery pack.

In some examples, the conductive lead is a single-piece body so that the proximal portion and the distal portion are formed integrally.

In some examples, the proximal portion is a straight and flat plate portion.

In some examples, the distal portion is a straight and flat plate portion, or the distal portion is a curved and flat plate portion.

In some examples, the bent portion between the proximal portion and the distal portion is located outside of the case.

In some examples, the proximal portion extends from the electrode assembly to the bent portion in a direction parallel to a length direction of the electrode assembly.

In some examples, the proximal portion and the distal portion are each provided as a straight and flat plate portion and are arranged so as to form an acute angle of 5 to 80 degrees, or 15 to 75 degrees, therebetween.

The method according to the first aspect may be executed to provide a battery module or battery pack according to the first aspect, and the features of the method may apply to the characteristics of the battery module/pack and vice-versa.

### DETAILED DESCRIPTION OF EMBODIMENTS

The features and numerous advantages of the method, system and battery module or battery pack according to the present invention will best be understood from a detailed description of preferred embodiments with reference to the accompanying drawings, in which:
- Fig. 1: schematically illustrates an example of a battery module or battery pack;
- Fig. 2: illustrates a flowchart of method of assembling a battery module or battery pack according to an example;
- Fig. 3: schematically illustrates an example of a pouch-type battery cell 12 in an isometric view;
- Fig. 4: schematically illustrates another example of a battery module or battery pack 10 comprising a plurality of pouch-type battery cells; and
- Fig. 5: schematically illustrates another example of a battery module or battery pack.

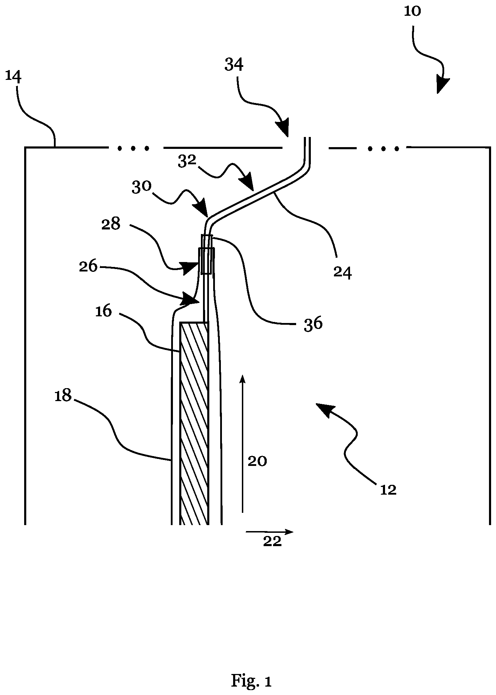

Fig. 1 schematically illustrates an example of a battery module or battery pack 10 comprising a pouch-type battery cell 12 and a housing 14. The housing 14 houses the battery cell 12 and can comprise mounting elements (not shown) for holding the battery cell 12 in a pre-determined position alongside a plurality of other pouch-type battery cells.

The battery cell 12 comprises an electrode assembly 16 enclosed in a pouch-type case 18, wherein the electrode assembly 16 generally comprises a stack of active electrode materials, with anode type materials separated from cathode type electrode materials by a separator. The pouch-type case 18 retains the electrode assembly 16 as well as an electrolyte of the battery cell 12 and is sealed along the edges. The battery cell 12 may feature a rectangular shape elongated along a length direction 20 of the battery cell 12 and the width direction (extending into the plane of projection) when compared to a thickness direction 22 along which the active electrode material of the electrode assembly 16 are stacked. A seam of the pouch-type case 18, in which opposite halves of the pouch-type case 18 may be sealed along the thickness direction 22, may extend away from the electrode assembly 16 along the width direction and the length direction 20.

A conductive lead 24 of the battery cell 12 may extend from the electrode assembly 16 through the seam of the pouch-type case 18 towards the outside of the pouch-type case 18. The conductive lead 24 is generally connected to one of the active electrode materials through an electrode tab to enable external access to a stored electrical energy in the battery cell 12. In some examples, the conductive lead 24 is connected to a plurality of electrode tabs of the electrode assembly 16, e.g. as part of a parallel electrical connection to different layers of the stack of active electrode materials.

A pouch portion 26 of the conductive lead 24 may extend through the pouch-type case 18 towards the seam of the pouch-type case 18, through the seam in a sealing portion 28 of the conductive lead 24, and towards a bent portion 30 substantially along the length direction 20 of the battery cell 12. From the bent portion 30, a distal portion 32 of the conductive lead 24 extends at angle with respect to the length direction 20 towards a lead terminal 34 of the housing 14. In the sealing portion 28, the conductive lead 24 may be joined to the pouch-type case 18 via a terminal film 36, which may seal an opening of the pouch-type case 18 through which the conductive lead 24 protrudes. For example, the conductive lead 24 may be provided with the terminal film 36 on a portion of the conductive lead 24, and the terminal film 36 may be joined to a sealing layer of the pouch-type case 18 when the pouch-type case 18 is sealed, e.g. through thermal bonding.

In the illustrated example, the location of the lead terminal 34 is shifted laterally from a position of the conductive lead 24 in the pouch portion 26 (e.g. connection point to an electrode tab of the electrode assembly 16), with a shift along the thickness direction 22 of the battery cell 12.

In Fig. 1, the lead terminal 34 is a lead hole through the housing 14, such that the conductive lead can extend through the lead hole to the outside of the housing 14. However, the lead terminal 34 may equally be implemented, e.g., as an electrical connection point inside of the housing 14 to which the conductive lead 24 can be connected during assembly.

The bent portion 30 enables the conductive lead 24 to extend towards the lead terminal 34 with minimal strain on the battery cell 12, in particular at the pouch portion 26 and the sealing portion 28 of the conductive lead 24, based on a configuration of the bent portion 30 in accordance with the pre-determined position of the battery cell 12, such that the conductive lead 24 extends towards the lead terminal 34, when the battery cell 12 is inserted in the pre-determined position.

As a result, the battery module or batter pack 10 can avoid a problem in the prior art, where bending of the conductive lead 24 during assembly in the housing 14, e.g. as part of shifting a distal end of the conductive lead 24 towards the lead terminal 34, can deflect a pouch portion 26 and/or sealing portion 28 of the conductive lead, which can increase a risk of interference or mechanical strain on the battery cell 12. Rather, the conductive lead 24 can be inelastically bent, such as to extend along a path to the lead terminal 34 in the absence of external forces, when the battery cell 12 is inserted in the predetermined position in the housing 14.

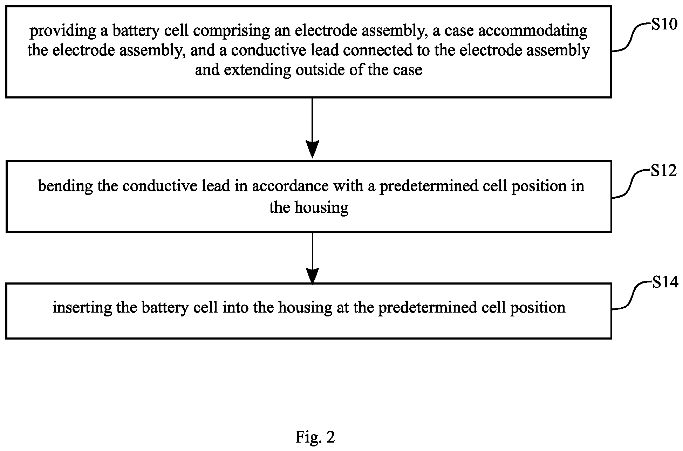

Fig. 2 illustrates a flowchart of method of assembling a battery module or battery pack 10 comprising a battery cell 12 and a housing 14 for holding a plurality of battery cells 12 according to an example. The method comprises providing the battery cell 12 comprising an electrode assembly 16, a case 18 accommodating the electrode assembly 16, and a conductive lead 24 connected to the electrode assembly 16 and extending outside of the case 18 (S10). The method further comprises bending the conductive lead 24 in accordance with a predetermined cell position in the housing 14 (S12), such that a distal portion 32 of the conductive lead 24 extends from a bent portion 30 of the conductive lead 24 at an angle with respect to a proximal portion of the conductive lead 24 towards a lead terminal 34 of the housing 14 for the predetermined cell position, the proximal portion being in physical contact with the electrode assembly 16. The method further comprises inserting the battery cell 12 into the housing 14 at the predetermined cell position (S14).

The battery cell 12 can be a pouch-type battery cell 12 with a pouch-type case 18 for holding the electrode assembly 16. The battery cell 12 can be provided after sealing the electrode assembly 16 with an electrolyte in the pouch-type case 18, with the conductive lead 24 protruding straight from the pouch-type case 18, e.g. along the length direction 20. The conductive lead 24 may be plate shaped with two major directions of extension along a width and length direction 20, with the respective extension being at least 8 times larger than a thickness of the conductive lead 24 along a thickness direction 22.

The pouch-type battery cell 12 may be inserted into the housing 14 at the predetermined cell position after bending the conductive lead 24. The conductive lead 24 may be bent at a predefined bent portion 30, which may be located outside of the pouch portion 26 of the conductive lead and preferably outside of the pouch-type case 18, such that the conductive lead 24 may extend straight in the pouch portion 26 and the sealing portion 28 (preferably along the length direction 20 of the electrode assembly 16). The bending angle associated with the bent portion 30 between a distal portion 32 and a proximal portion of the conductive lead 24 may be selected based on an assembly configuration of the pouch-type battery cell 12 in the housing 14. The bending may include an inelastic deformation, such that the bent portion 30 defines a change of the extension direction of the conductive lead 24 in the absence of external forces.

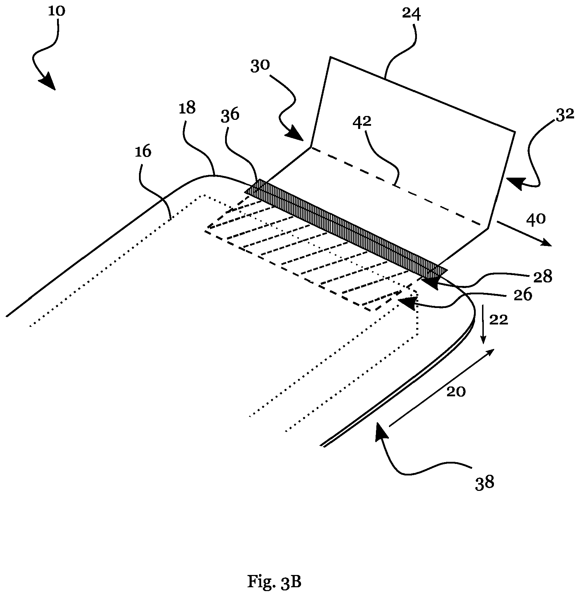

Fig. 3 schematically illustrates an example of a pouch-type battery cell 12 in an isometric view after bending the conductive lead 24 and prior to inserting the pouch-type battery cell 12 into the housing 14. The battery cell 12 comprises a pouch-type case 18 enclosing an electrode assembly 16 with a seam 38 on an edge of the pouch-type case 18, the seam 38 connecting opposite halves of the pouch-type case 18 along the thickness direction 22 and extending at least partially around a perimeter of the electrode assembly 16 along the length direction 20 and a width direction 40.

The conductive lead 24 is plate-shaped with an extension along the length direction 20 and along the width direction 40 being significantly larger, e.g. 8 times larger, than an extension along the thickness direction 22, along which the electrode materials and the separators of the electrode assembly 16 are stacked, e.g. prior to bending. The conductive lead 24 is connected to the electrode assembly 16 inside of the pouch-type case 18, e.g. via electrode tabs protruding from the electrode assembly 16 along the length direction 20, for enabling an electrical collection to the electrode assembly 16 from the outside of the pouch-type case 18.

The conductive lead 24 extends through the seam 38 of the pouch-type case 18, wherein the conductive lead 24 is joined to the pouch-type case 18 via a terminal film 36, e.g. through welding, wherein the terminal film 36 should be configured to prevent leakage of the contents of the pouch-type case 18 (e.g. the electrolyte) once the pouch-type case 18 is sealed.

The conductive plate 24 extends through the seam 38 along the length direction 20 of the battery cell 12, towards a bent portion 30 outside of the pouch-type case 18. In the pouch portion 26 and in the sealing portion 28, the conductive plate 24 is straight along the length direction 20 and the width direction 40. At the bent portion 30, the conductive lead 24 exhibits a kink along a folding line 42, which extends along the width direction 40 in the illustrated example.

Past the bent portion 30, a distal portion 32 of the conductive lead 24 extends at an angle with respect to a proximal portion of the conductive lead 24 extending from the electrode assembly 16 to the bent portion 30. As the proximal portion extends substantially along the length direction 20 of the battery cell 12, the distal portion 32 is tilted with respect to the length direction 20 of the battery cell 12.

After the bending, the battery cell 12 may be inserted into the housing 14 at a pre-determined position, e.g. in accordance with a geometry of mounting elements in the housing 14 for holding pouch-type battery cells 12. The pre-determined position may be associated with a pre-determined lead terminal 34 of the housing, defining a connection geometry of the conductive lead 24. The bent portion 30 may be configured to enable a path of the conductive lead 24 to the lead terminal 34, e.g. along the connection geometry, without further bending of the conductive lead 24, in particular in the pouch portion 26 or the sealing portion 28. As a result, a proximal portion of the conductive lead 24, e.g. including the pouch portion 26 and the sealing portion 28 and connected to the electrode assembly 16, may extend straight towards the bent portion 30, wherein the extension direction of the proximal portion may be aligned with the length direction 20 of the battery cell 12. In some examples, the bent portion 30 is arranged outside the pouch portion 26 of the conductive lead 24, e.g. in the sealing portion 28 or in a portion of the conductive lead 24 featuring the terminal film 36. In some examples, the bent portion 30 is arranged distally with respect to the terminal film.

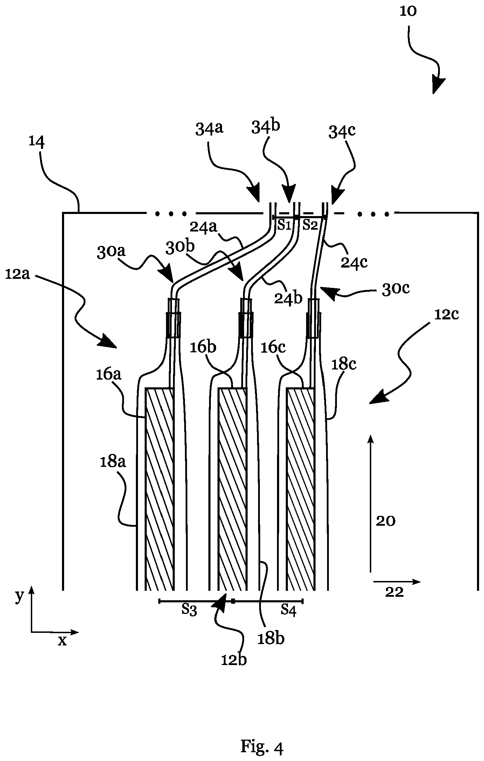

Fig. 4 schematically illustrates another example of a battery module or battery pack 10 comprising a plurality of pouch-type battery cells 12, 12a-c and a housing 14 holding the plurality of pouch-type battery cells 12, 12a-c. In the illustrated example, the plurality of pouch-type battery cells 12 comprises a first battery cell 12a, a second battery cell 12b and a third battery cell 12c arranged inside the housing 14 and aligned with each other along the z-direction with their respective width direction 40 (into the plane of projection) and along the y-direction with their respective length direction 20, and shifted with respect to each other along the x-direction, corresponding to the thickness direction 22 of the battery cells 12, 12a-c.

Each of the battery cells 12, 12a-c is associated with a respective lead terminal 34a-c in the housing 14, i.e. a first lead terminal 34a associated with the first battery cell 12a, a second lead terminal 34b associated with the second battery cell 12b, and a third lead terminal 34c associated with the third battery cell 12c. The lead terminals 34a-c are shifted with respect to each other along the x-direction, corresponding to the thickness direction 22 of the corresponding battery cells 12a-c.

In Fig. 4, neighboring lead terminals 34a-c are shifted with respect to each other along the x-direction by shifts S1, S2, which are different from shifts S3, S4 of the associated neighboring battery cells 12a-c along the x-direction. As a result, a distance and/or a connection vector between a pouch portion 26 of the respective conductive lead 24a-c to the corresponding lead terminal 34a-c can be different for the battery cells 12a-c mounted in the housing 14 at different pre-determined mounting positions.

In Fig. 4 the bent portions 30a-c of the respective conductive lead 24a-c are configured differently in accordance with the respective lead terminal 34a-c associated with the respective battery cell 12a-c. Specifically, a first bent portion 30a of the first battery cell 12a is configured, such that the distal portion 32 of a first conductive lead 24a of the first battery cell 12a extends towards a first lead terminal 34a, when the first battery cell 12a is inserted into the housing 14. In addition, a second (third) bent portion 30b(c) of the second (third) battery cell 12b(c) is configured, such that the distal portion 32 of a second (third) conductive lead 24b(c) of the second (third) battery cell 12b(c) extends towards a second (third) lead terminal 34b(c), when the second (third) battery cell 12b(c) is inserted into the housing 14. The first bent portion 30a defines a first angle between the proximal portion and the distal portion 32 of the first conductive lead 24a, wherein the first angle is different from a second (third) angle between the proximal portion and the distal portion 32 of the second (third)conductive lead 24b(c).

Each of the conductive leads 24a-c of the plurality of battery cells 12a-c can extend along a common direction in a proximal portion between the respective bent portion 30a-c and the respective electrode assembly 16a-c. As a result, mechanical strain and risk of interference of conductors inside and outside of the pouch-type cases 18a-c can be minimized.

The skilled person will appreciate that a pouch-type battery cell 12 will generally comprise two conductive leads 24 for the different polarities of the battery cell 12. In some examples, the two conductive leads 24 protrude from the pouch-type case 18 along the same direction, e.g. parallel to each other, such as shifted along the width direction 40 of the battery cell 12. In such a case, the different conductive leads 24 may be guided towards different lead terminals 34, which can be arranged at the same or a different pre-determined position. In the latter case, the conductive leads 24 may be bent at different angles at a respective bent portion 30 prior to inserting the battery cell 12 into the housing 14. The proximal portions of the two conductive leads 24 of the battery cell 12 may extend from the electrode assembly 16 in parallel towards the bent portion 30 and may extend from the bent portion 30 at different extension directions in their respective distal portions 32.

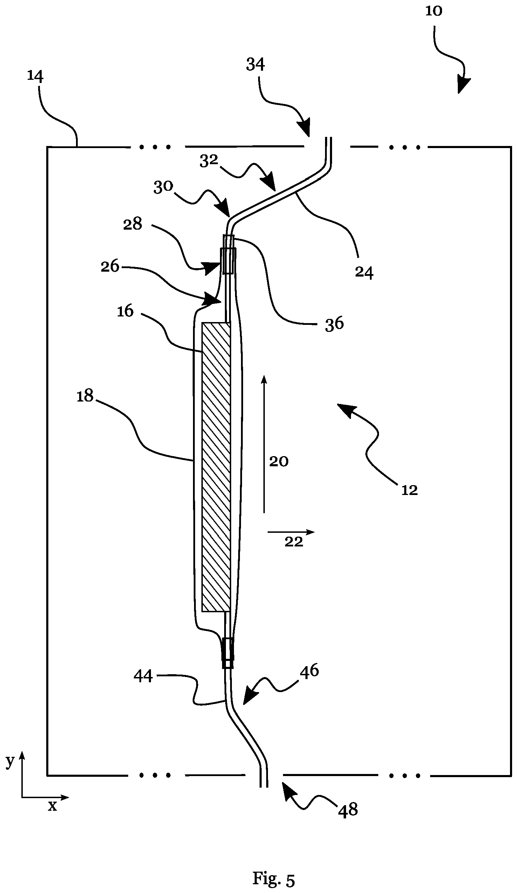

Fig. 5 schematically illustrates another example of a battery module or battery pack 10 comprising a pouch-type battery cell 12 and a housing 14 holding the pouch-type battery cell 12. The battery cell 12 comprises an upper conductive lead 24 extending along the length direction 20 of the battery cell 12 towards a bent portion 30 and inclined from the length direction 20 towards a top lead terminal 34 at a predetermined position associated with the battery cell 12 at the top of the housing 14. The battery cell 12 further comprises a bottom conductive lead 44 extending along the length direction 20 of the battery cell 12 towards a bent portion 46 and inclined from the length direction 20 towards a bottom lead terminal 48 at a predetermined position associated with the battery cell 12 at the bottom of the housing 14. The upper conductive lead 24 and the bottom conductive lead 44 may be connected to electrode tabs of the electrode assembly 16 of opposite polarity.

In the illustrated example, the top lead terminal 34 and the bottom lead terminal 48 are shifted with respect to a position of the battery cell 12 in the housing 14 by different shifts along the x-direction, corresponding to the thickness direction 22 of the battery cell 12. As a result, a configuration of the bent portion 30 of the top conductive lead 24 is different from a configuration of the bent portion 46 of the bottom conductive lead 44, with the respective distal portions 32 of the conductive leads 24, 44 extending at different angles from the bent portion 30, 46 towards the top lead terminal 34 and the bottom lead terminal 48, respectively.

At the same time, proximal portions of the upper conductive lead 24 and the bottom conductive lead 44 may extend along a same or mirrored direction with respect to the length direction 20 of the battery cell 12, such as both extending along the length direction 20.

However, in some examples, the top lead terminal 34 and the bottom lead terminal 48 may also be aligned along the x-direction of the housing 14, such that the angle between the proximal portion and the distal portion 32 may be the same for the upper conductive lead 24 and the bottom conductive lead 44.

Although the detailed description of embodiments primarily discusses pouch-type battery cells, the skilled person will appreciate that the features of the examples, such as the housing geometry, the assembly method, or the conductive lead geometry, can equally apply to other battery cell types, such as cylindrical or prismatic battery cells.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: battery module or battery pack
- 12: battery cell
- 12a-c: first, second, and third battery cell
- 14: housing
- 16: electrode assembly
- 16a-c: first, second, and third electrode assembly
- 18: pouch-type case
- 18a-c: first, second, and third pouch-type case
- 20: length direction
- 22: thickness direction
- 24: (upper) conductive lead
- 24a-c: first, second, and third conductive lead
- 26: pouch portion of the conductive lead
- 28: sealing portion of the conductive lead
- 30: bent portion of the conductive lead
- 30a-c: first, second, and third bent portion
- 32: distal portion of the conductive lead
- 34: (top) lead terminal
- 34a-c: first, second, and third lead terminal
- 36: terminal film
- 38: seam
- 40: width direction
- 42: folding line
- 44: bottom conductive lead
- 46: bent portion of the bottom conductive lead
- 48: bottom lead terminal

## Claims

1. A method of assembling a battery module or battery pack (10) comprising a plurality of battery cells (12) and a housing (14) for holding the plurality of battery cells (12), the method comprising:
Providing a battery cell (12, 12a-c) comprising an electrode assembly (16, 16a-c), a case (18) accommodating the electrode assembly (16, 16a-c), and a conductive lead (24, 24a-c, 44) connected to the electrode assembly (16, 16a-c) and extending outside of the case (18);
Bending the conductive lead (24, 24a-c, 44) in accordance with a predetermined cell position of the battery cell (12, 12a-c) in the housing (14), such that a distal portion (32) of the conductive lead (24, 24a-c, 44) extends from a bent portion (30, 30a-c, 46) of the conductive lead (24, 24a-c, 44) at an angle with respect to a proximal portion of the conductive lead (24, 24a-c, 44) towards a lead terminal (34) of the housing (14) for the predetermined cell position, the proximal portion being in physical contact with the electrode assembly (16, 16a-c); and
inserting the battery cell (12, 12a-c) into the housing (14) at the predetermined cell position.

2. The method of claim 1, wherein the case (18) is a pouch-type case (18), and the battery cell (12) is a pouch-type battery cell (12).

3. The method of claim 1 or 2, wherein the angle is selected such that the conductive lead (24, 24a-c, 44) extends through a lead hole (34) of the housing (14) when the battery cell (12, 12a-c) is in the predetermined cell position.

4. The method of any one of the preceding claims, wherein the bent portion (30, 30a-c, 46) is arranged outside the case (18, 18a-c).

5. The method of any one of the preceding claims, wherein the conductive lead (24, 24a-c, 44) is bent, such that the proximal portion extends in parallel to a length direction (20) of the electrode assembly (16, 16a-c) inside of the case (18), when the battery cell (12, 12a-c) is inserted into the housing (14) at the predetermined cell position.

6. The method of any one of the preceding claims, wherein the conductive lead (24, 24a-c, 44) is bent, such that the proximal portion is a straight and flat plate portion.

7. The method of any one of the preceding claims, wherein the bent portion (30, 30a-c, 46) features a kink determining the angle of the distal portion (32) with respect to the proximal portion.

8. The method of any one of the preceding claims, wherein the battery cell (12, 12a-c) is a first battery cell (12, 12a-c), and wherein the method further comprises
providing a second battery cell (12, 12a-c), and
bending the conductive lead (24, 24a-c, 44) of the second battery cell (12, 12a-c), such that an angle between the proximal portion and the distal portion (32) of the conductive lead (24, 24a-c, 44) of the second battery cell (12, 12a-c) is different from the angle of the conductive lead (24, 24a-c, 44) of the first battery cell (12, 12a-c).

9. A system for assembling a battery module or battery pack (10) comprising a battery cell (12, 12a-c) and, the system comprising
a bending module configured to bend a conductive lead (24, 24a-c, 44) of the battery cell (12, 12a-c) according to a predetermined cell position of the battery cell (12, 12a-c) in a housing (14) of the battery module or battery pack, such that a distal portion (32) of the conductive lead (24, 24a-c, 44) extends from a bent portion (30, 30a-c, 46) of the conductive lead (24, 24a-c, 44) at an angle with respect to a proximal portion of the conductive lead (24, 24a-c, 44) towards a lead terminal (34, 34a-c, 48) of the housing (14) for the predetermined cell position, the proximal portion being in physical contact with an electrode assembly (16, 16a-c) of the battery cell (12, 12a-c), when the electrode assembly (16, 16a-c) is enclosed in a corresponding case.

10. A battery module or battery pack (10) comprising:
a housing (14) comprising a plurality of lead terminals (34), and
a battery cell (12, 12a-c) comprising:
an electrode assembly (16, 16a-c) comprising sheets of electrodes and separators layered upon each other in a thickness direction (22);
a case (18) accommodating the electrode assembly (16, 16a-c);
a conductive lead (24, 24a-c, 44) having a proximal portion physically connected to the electrode assembly (16, 16a-c) and a distal portion (32) extending outside of the case (18),
wherein the conductive lead (24, 24a-c, 44) is configured to include a bent section so that the distal portion (32) extends at an angle with respect to the proximal portion towards a lead terminal (34) of the plurality of lead terminals (34), wherein the proximal portion extends through the case (18) in a direction parallel to a length direction (20) of the electrode assembly (16, 16a-c).

11. The battery module or battery pack (10) of claim 10,
wherein the conductive lead (24, 24a-c, 44) is a single-piece body so that the proximal portion and the distal portion (32) are formed integrally.

12. The battery module or battery pack (10) of claim 10 or 11,
wherein the proximal portion is a straight and flat plate portion; and/or
wherein the proximal portion extends from the electrode assembly (16, 16a-c) to the bent portion (30, 30a-c, 46) in a direction parallel to a length direction (20) of the electrode assembly (16, 16a-c).

13. The battery module or battery pack (10) of any one of claims 10 to 12,
wherein the distal portion (32) is a straight and flat plate portion, or
wherein the distal portion (32) is a curved and flat plate portion.

14. The battery module or battery pack (10) of any one of claims 10 to 13,
wherein the bent portion (30, 30a-c, 46) between the proximal portion and the distal portion (32) is located outside of the case (18).

15. The battery module or battery pack (10) of any one of claims 10 to 14,
wherein the proximal portion and the distal portion (32) are each provided as a straight and flat plate portion and are arranged so as to form an acute angle of 5 to 80 degrees, or 15 to 75 degrees, therebetween.

## Amended claims

### Amended claims in accordance with Rule 137(2) EPC.

1. A method of assembling a battery module or battery pack (10) comprising a plurality of battery cells (12) and a housing (14) for holding the plurality of battery cells (12), the method comprising:
Providing a pouch-type battery cell (12, 12a-c) comprising an electrode assembly (16, 16a-c), a pouch-type case (18) accommodating the electrode assembly (16, 16a-c), and a conductive lead (24, 24a-c, 44) connected to the electrode assembly (16, 16a-c) inside the pouch-type case (18) via electrode tabs protruding from the electrode assembly (16) along the length direction (20), and extending outside of the pouch-type case (18);
Bending the conductive lead (24, 24a-c, 44) in accordance with a predetermined cell position of the pouch-type battery cell (12, 12a-c) in the housing (14), such that a distal portion (32) of the conductive lead (24, 24a-c, 44) extends from a bent portion (30, 30a-c, 46) of the conductive lead (24, 24a-c, 44) at an angle with respect to a proximal portion of the conductive lead (24, 24a-c, 44) towards a lead terminal (34) of the housing (14) for the predetermined cell position, the proximal portion being in physical contact with the electrode assembly (16, 16a-c); and
inserting the pouch-type battery cell (12, 12a-c) into the housing (14) at the predetermined cell position,
wherein the method is **characterized in that**
the bent portion (30, 30a-c, 46) is arranged outside the pouch-type case (18, 18a-c), and **in that**
the conductive lead (24, 24a-c, 44) is bent, such that the proximal portion extends in parallel to a length direction (20) of the electrode assembly (16, 16a-c) inside of the pouch-type case (18), when the pouch-type battery cell (12, 12a-c) is inserted into the housing (14) at the predetermined cell position.

2. The method of claim 1, wherein the angle is selected such that the conductive lead (24, 24a-c, 44) extends through a lead hole (34) of the housing (14) when the pouch-type battery cell (12, 12a-c) is in the predetermined cell position.

3. The method of any one of the preceding claims, wherein the conductive lead (24, 24a-c, 44) is bent, such that the proximal portion is a straight and flat plate portion.

4. The method of any one of the preceding claims, wherein the bent portion (30, 30a-c, 46) features a kink determining the angle of the distal portion (32) with respect to the proximal portion.

5. The method of any one of the preceding claims, wherein the pouch-type battery cell (12, 12a-c) is a first battery cell (12, 12a-c), and wherein the method further comprises
providing a second battery cell (12, 12a-c), and
bending the conductive lead (24, 24a-c, 44) of the second battery cell (12, 12a-c), such that an angle between the proximal portion and the distal portion (32) of the conductive lead (24, 24a-c, 44) of the second battery cell (12, 12a-c) is different from the angle of the conductive lead (24, 24a-c, 44) of the first battery cell (12, 12a-c).

6. The method of claim 5, wherein the method further comprises
providing a third battery cell (12, 12a-c), and
bending the conductive lead (24, 24a-c, 44) of the third battery cell (12, 12a-c), such that an angle between the proximal portion and the distal portion (32) of the conductive lead (24, 24a-c, 44) of the third battery cell (12, 12a-c) is different from the angle of the conductive lead (24, 24a-c, 44) of the first battery cell (12, 12a-c) and the second battery cell (12, 12a-c).

7. A system for assembling a battery module or battery pack (10) comprising a pouch-type battery cell (12, 12a-c) and, the system comprising
a bending module configured to bend a conductive lead (24, 24a-c, 44) of the pouch-type battery cell (12, 12a-c) according to a predetermined cell position of the pouch-type battery cell (12, 12a-c) in a housing (14) of the battery module or battery pack, such that a distal portion (32) of the conductive lead (24, 24a-c, 44) extends from a bent portion (30, 30a-c, 46) of the conductive lead (24, 24a-c, 44) at an angle with respect to a proximal portion of the conductive lead (24, 24a-c, 44) towards a lead terminal (34, 34a-c, 48) of the housing (14) for the predetermined cell position, the proximal portion being in physical contact with an electrode assembly (16, 16a-c) of the pouch-type battery cell (12, 12a-c) inside the pouch-type case (18) via electrode tabs protruding from the electrode assembly (16) along the length direction (20), when the electrode assembly (16, 16a-c) is enclosed in a corresponding pouch-type case,
**characterized in that**
the bent portion (30, 30a-c, 46) between the proximal portion and the distal portion (32) is located outside of the pouch-type case (18), and **in that**
the proximal portion extends from the electrode assembly (16, 16a-c) to the bent portion (30, 30a-c, 46) in a direction parallel to a length direction (20) of the electrode assembly (16, 16a-c).

8. A battery module or battery pack (10) comprising:
a housing (14) comprising a plurality of lead terminals (34), and
a pouch-type battery cell (12, 12a-c) comprising:
an electrode assembly (16, 16a-c) comprising sheets of electrodes and separators layered upon each other in a thickness direction (22);
a pouch-type case (18) accommodating the electrode assembly (16, 16a-c);
a conductive lead (24, 24a-c, 44) having a proximal portion physically connected to the electrode assembly (16, 16a-c) inside the pouch-type case (18) via electrode tabs protruding from the electrode assembly (16) along the length direction (20), and a distal portion (32) extending outside of the pouch-type case (18),
wherein the conductive lead (24, 24a-c, 44) is configured to include a bent section so that the distal portion (32) extends at an angle with respect to the proximal portion towards a lead terminal (34) of the plurality of lead terminals (34), wherein the proximal portion extends through the pouch-type case (18) in a direction parallel to a length direction (20) of the electrode assembly (16, 16a-c),
**characterized in that**
the bent portion (30, 30a-c, 46) between the proximal portion and the distal portion (32) is located outside of the pouch-type case (18), and **in that**
the proximal portion extends from the electrode assembly (16, 16a-c) to the bent portion (30, 30a-c, 46) in a direction parallel to a length direction (20) of the electrode assembly (16, 16a-c).

9. The battery module or battery pack (10) of claim 8,
wherein the conductive lead (24, 24a-c, 44) is a single-piece body so that the proximal portion and the distal portion (32) are formed integrally.

10. The battery module or battery pack (10) of claim 8 or 9,
wherein the proximal portion is a straight and flat plate portion.

11. The battery module or battery pack (10) of any one of claims 8 to 10,
wherein the distal portion (32) is a straight and flat plate portion, or
wherein the distal portion (32) is a curved and flat plate portion.

12. The battery module or battery pack (10) of any one of claims 8 to 11,
wherein the proximal portion and the distal portion (32) are each provided as a straight and flat plate portion and are arranged so as to form an acute angle of 5 to 80 degrees, or 15 to 75 degrees, therebetween.
